# EUROPEAN PATENT APPLICATION

(11) **EP 0 964 547 A2**
(43) Date of publication of application: **15.12.1999**
(21) Application number: 99401208.6
(22) Date of filing: 20.05.1999
(51) Int. Cl.: H04L 12/24

(54) **A terminal controller software component**

(30) Priority: 12.06.1998 ES 9801248
(71) Applicant: ALCATEL, 75008 Paris (FR)
(72) Inventor: Huelamo Platas, José Javier, 28045 Madrid (ES); Gomez Mateo, Daniel, 28047 Madrid (ES)
(74) Representative: Feray, Valérie

(57) **Abstract**

A terminal controller software component for a communications network system, said terminal controller (TC) intended for maintaining and updating information related to the configuration of a terminal in order to establish, through the use of said information, a user context associated with an access session opened in said terminal in order to supply said user context to a user agent (UA) via a provider agent (PA); and also to provide a terminal layer adapter with the network address where the terminal is connected.

## Description

The present invention relates to a software component for the configuration control of terminals in communications networks.

More specifically, the invention is implemented in a Telecommunications Information Networking Architecture, known as TINA, which is a distributed software architecture for telecommunications defined within an international consortium known as the TINA Consortium.

The terminal controller component that the invention proposes takes charge of the maintenance of the terminal configuration information (TCl) and of the implementation of the appropriate instructions together with other components related to the use of said information, said terminal controller component being located in the consumer domain.

### BACKGROUND OF THE INVENTION

Presently, the network architecture based on TINA proposes that the terminal configuration information (TCl) be maintained in the provider agent, this latter being what represents the provider of the services supported in the terminal.

The problem associated with the maintenance of the TCl in the provider agents is that although the provider agent is also located in the consumer domain, it is necessary that a provider agent exits for each retailer supported in said consumer domain, resulting in that there may either be several provider agents in a single consumer domain, or there may be none as a result of having been uninstalled, as they can be downloaded from the network for their subsequent installation.

As a consequence, the provider agent is not an appropriate component for maintaining the TCl since, as there can be several provider agents, it would be difficult to maintain the integrity of this information lodged at the same time in various provider agents, and no provider agent will assume the responsibility for maintaining the master version of said information.

Moreover, if the provider agents are downloaded from the network, there can be periods of time in which the consumer domain does not contain any provider agent, giving rise to the terminal configuration information being lost, or not being available at all times. This loss or non-availability can suppose a major drawback since said information must be always available since, at any moment, a user agent outside an access session may require it.

### SUMMARY OF THE INVENTION

To overcome the problems mentioned above, the terminal controller object of the present invention is proposed, which offers the possibility of improving the maintenance and handling of the TCl from the consumer domain without the need to use provider agents for this purpose, making it possible that said information is not lost and is always available for the rest of the network components from a single source, which is the terminal controller.

To this end, the terminal controller software component is incorporated in the consumer domain from terminal initialisation. Said component provides a series of interfaces that are used for updating the TCl, should this be necessary, from the terminal. The terminal controller also offers an interface for the provider agents for supplying the terminal configuration information necessary for setting up user contexts in the user agent associated with the access session opened in said terminal to actuate in association with the provider represented by the corresponding provider agent, and also for providing a terminal layer adapter with the network address to which the terminal is connected.

The terminal controller software component for a communications network system, according to the present invention is thus characterised in that it is incorporated in a terminal and is adapted for maintaining and updating information relative to a terminal configuration whereby said information is furnished to a user agent (UA) in order to establish a user context associated with an access session opened in said terminal and to provide said user context to a retailer (1) in said network.

This and further embodiments of the invention are described in more detail hereinbelow as well as in the claims.

### BRIEF DESCRIPTION OF THE DRAWINGS

Figure 1 is a schematic diagram showing the main software components related to the terminal controller, object of the invention.

Figure 2 shows a scenario corresponding to the opening of an access session in a fixed terminal.

### DESCRIPTION OF THE PREFERRED EMBODIMENT

The TINA communications network system, over which is laid the TINA software architecture and consequently the new component that is proposed by the present invention, is formed by a set of switches, for example ATM switches, controlled through interfaces opened to TINA connection management components.

This component, together with the rest of the components which form the TINA architecture are located in the TINA user terminals such as personal computers or workstations, and on the nodes, which are normally also workstations, that control the network switches.

The TINA components are lodged on a Distributed Processing Environment (DPE) based on the well-known CORBA architecture (Common Object Request Broker Architecture), which permits said nodes and terminals to have different software/hardware technologies or manufacturers. These nodes and terminals having a DPE core are interconnected with each other forming what is called the transport network for the DPE cores or Kernel Transport Network (KTN). The connections for streamed data, like video or audio signals, are controlled by means of the TINA connection management components that operate on the switches that make up the transport network. The KTN network can be an independent network or it can be a network that makes use of connections in the transport network.

It is to be pointed out that the terminal identity is used to identify all types of terminals constituting a single value for each terminal. It is also used to identify public terminals when a user tries to implement a remote user registration. To this end, the terminal identity is presented in a stream form as in this way it is easier to be employed by the human user. Consequently, the long type of terminal identifier that is proposed by the known retailer reference point (Ret-RP) is replaced by the stream type proposed by this invention.

The mobile terminals subscribe to a retailer domain. For this type of terminal, the terminal identity is also used for knowing said provider domain in which a mobile terminal is subscribed. This stream shall include a part termed the provider identity that shall be absent in the case of fixed terminals. Said provider identity is associated with the stream type provider identity known in the aforementioned retailer reference point (Ret-RP).

The terminal identity is also used as context name for access sessions.

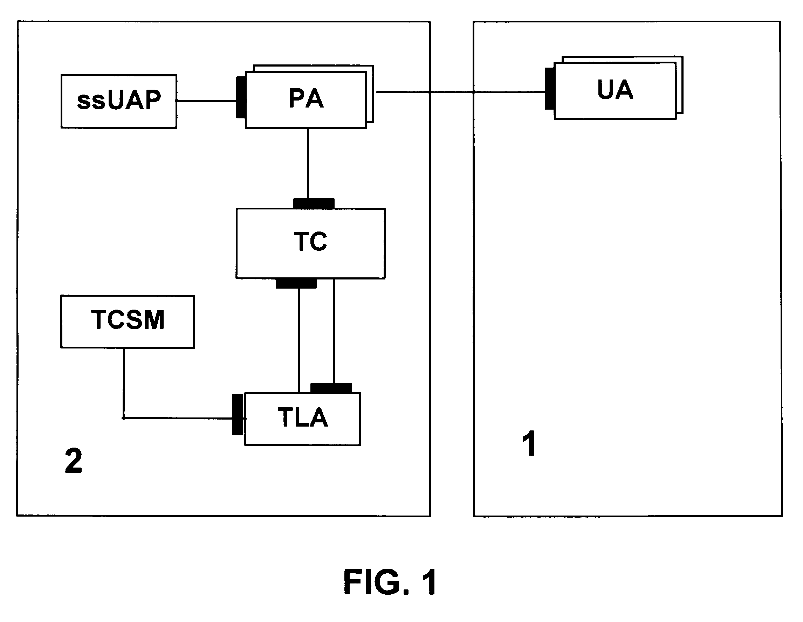

The terminal controller (TC), object of the present invention, is implemented in a communications network with distributed software, preferably of the TINA type, which as can be seen from figure 1 can be divided into retailer domains (1) and consumer domains (2).

Each retailer domain (1), incorporates, inter alia, the following software component, of the standard TINA type:
- user agent (UA), which represents the end user or subscriber when participating in service sessions.

In turn, each consumer domain (2) incorporates the following software components:
- provider agent (PA), which represents the provider of the services supported in the terminal;
- terminal layer adapter (TLA), which deals with the management of a specific layer technology within the terminal like, for example, ATM;
- terminal communication sessions manager (TCSM), which manages said type of sessions within the terminal; and
- service session user application (ssUAP), which as its name indicates, represents the user application and is located in the consumer domain.

As it has been stated above, the terminal controller (TC) is located in the consumer domain and contains information relative to the terminal configuration, including, inter alia, terminal identity, terminal type, mobility type and network address where the fixed or mobile terminal has been connected or registered.

The terminal controller (TC) has certain functionalities that are common for both fixed and mobile terminals including some specific functionality about mobility type.

The main functionalities common to all types of terminal mobility are the functions related with the handling of the terminal configuration.

The terminal configuration is obtained by invoking the corresponding operation by the provider agents (PA).

Likewise, the network address corresponding to the network access point, for example for ATM (asynchronous transfer mode) networks where the terminal has been connected, is in the terminal configuration. The terminal layer adapter (TLA), when invoking the corresponding operation in the terminal controller, is informed by the latter of the network address that has to be used.

A component termed terminal communication sessions manager (TCSM) obtains the network address from the terminal layer adapter (TLA) invoking in the latter the corresponding operation known in TINA.

The terminal layer adapter (TLA) can obtain the corresponding interface reference in the terminal controller (TC) by using a naming service.

The naming service consists of providing the reference to an interface based on a marker, which permits an interface or set of interfaces to be identified.

The network address can be obtained by the terminal layer adapter (TLA) when the latter is instanced by invoking the corresponding operation in the terminal controller. This is the normal procedure for fixed terminals.

In a fixed terminal, the terminal configuration is provided in the initialising phase of the terminal controller (TC). Under initialising conditions in the terminal controller (TC), the minimum information on the terminal configuration is formed by: terminal identity, terminal type, mobility type and network address, it being possible to include other items of information depending on the usage requirements.

The terminal controller (TC) requires a software interface in the terminal layer adapter for enabling the operations to which reference has been made in previous paragraphs concerning functionalities. This interface is:
* Network address interface of the terminal layer adapters (TLA). To obtain the references of this interface, use is made of a naming service each time a mobile terminal is connected, invoking the terminal controller (TC) the operation corresponding to updating of the network address in this interface of the terminal layer adapter (TLA).

The terminal controller (TC) provides a series of software interfaces which permit it to communicate with the rest of the network components for enabling the operations to which reference has been made in previous paragraphs concerning functionalities. These interfaces are:
* Terminal configuration interface for the provider agent (PA) which is supported by both fixed and mobile terminals. The references of this interface are obtained by using a naming service. The operations are:
   *obtain TerminalConfiguration*
   (output *Terminal Configuration)*

The terminal configuration in this operation consists of terminal identity, terminal type and mobility type. Nonetheless, other terminal configuration parameters can be employed depending on the usage requirements.

When an access session is established, the first operation that the provider agent (PA) has to invoke in the user agent (UA) is the establishing of a user context. If this is not invoked, it shall not be possible to utilise the access session and all remaining invoked operations shall emit output an access error alarm. The operation of establishing a user context contains specific information related to the terminal configuration. To introduce this information, the provider agent (PA) obtains it by invoking the terminal configuration interface of the terminal controller (TC).
* Network address interface for the terminal layer adapter (TLA), supported by fixed and mobile terminals, and whose references are obtained by using a naming service. The operations are:
   *obtainNetworkAddress*
   (output *Network Address)*

The network address is an E164 address that corresponds to a network access point, for example for asynchronous transfer mode (ATM) networks. The external equipment, which can be connected to a network access point, can be a terminal or a federated network. Each network access point (or terminal end point) of a connection, ATM for example, has an associated network address.

Each terminal is connected to a network access point, which is identified with a network address. In a fixed terminal, the network address is fixed, and in a mobile terminal, the network address changes each time the terminal is connected to a different network access point.

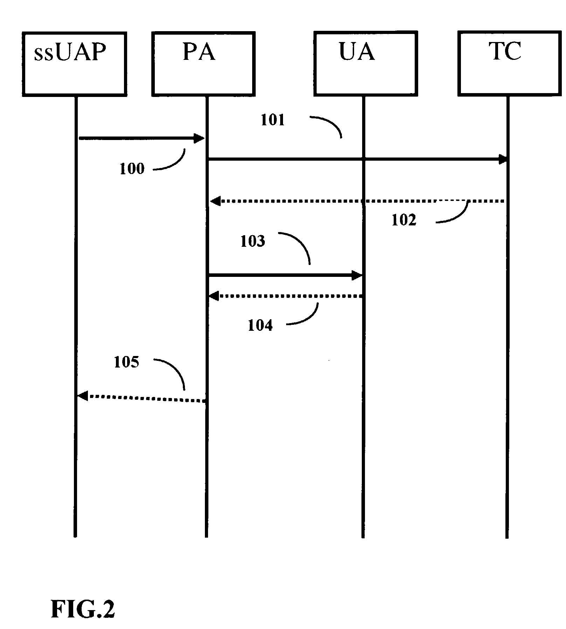

To provide a better understanding of the main functions included in the terminal controller, object of the present invention, the scenario corresponding to them is described below with the aid of figure 2.

In this figure the scenario corresponding to the opening of an access session can be observed. In step (100) of this figure, it can be seen that from a component corresponding to the service session user application (ssUAP) a request is made to the initial interface of the provider agent (PA) for the opening of an access session.

The provider agent (PA), in step (101), requests the terminal configuration from the terminal configuration interface of the terminal controller (TC), the answer being received in step (102). Subsequently, the provider agent (PA) requests the user agent (UA) to establish a user context. This process and the answer from the user agent (UA) can be seen in steps (103) and (104).

Once the user context has been established, the provider agent (PA) informs the service session user application (ssUAP) as observed in step (105).

Finally it is to be noted that the terminal controller software component of the present invention is intended to be used as a computer program comprising computer program code means. Therefore the present invention also relates to said computer program as well as a computer readable medium having said program recorded thereon, and comprising said computer program code means adapted to perform all the functions of the terminal controller software component of the invention when said program is run on a computer.

## Claims

1. A terminal controller software component for a communications network system, said network comprising a set of user terminals, characterised in that said terminal controller (TC) is incorporated in a terminal and is adapted for maintaining and updating information relative to a terminal configuration whereby said information is furnished to a user agent (UA) in order to establish a user context associated with an access session opened in said terminal and to provide said user context to a retailer (1) in said network.

2. A terminal controller software component, according to the preceding claim, characterised in that the terminal configuration comprises a terminal identity, a terminal type, a mobility type and a network address.

3. A terminal controller software component, according to any of the preceding claims, characterised in that the user context is established in the user agent (UA) that corresponds to a user that starts the access session, and comprises specific information relative to the terminal configuration and references to interfaces in a terminal.

4. A terminal controller software component, according to any of the preceding claims, characterised in that the terminal controller (TC) provides a series of software interfaces that permit it to communicate with the rest of the components in the network in order to enable the corresponding operations, said interfaces comprising:
- terminal configuration interface for the provider agent (PA), which is supported by both fixed and mobile terminals; and
- network address interface for the terminal layer adapter (TLA) supported by fixed and mobile terminals, and suitable for establishing network addresses in the connection or registration processes of a terminal.

5. A terminal controller software component, according to any of the preceding claims, characterised in that the terminal controller (TC) requires a network address interface for the terminal layer adapters (TLA) suitable for invoking, through the terminal controller (TC), the operations corresponding to the updating of the network address when a terminal is connected.

6. Computer program comprising computer program code means adapted to perform all the functions of the terminal controller software component of claim 1 when said program is run on a computer.

7. A computer readable medium having a program recorded thereon, said computer readable medium comprising computer program code means adapted to perform all the functions of the terminal controller software component of claim 1 when said program is run on a computer.
